# EUROPÄISCHE PATENTSCHRIFT

(11) **EP 1 055 686 B1**
(45) Veröffentlichungstag und Bekanntmachung des Hinweises auf die Patenterteilung: **04.08.2004**
(21) Anmeldenummer: 00110584.0
(22) Anmeldetag: 18.05.2000
(51) Int. Cl.: C08F 8/30

(54) **Wässrige Korrosionsschutzgrundierungen auf Basis von Polyvinylbutyral**
Waterborne anti-corrosive base-coat compositions based on polyvinyl butyral
Couches de fond aqueuses anticorrosion à base de polyvinylbutyral

(30) Priorität: 27.05.1999 AT 94099
(43) Veröffentlichungstag der Anmeldung: 29.11.2000
(73) Patentinhaber: Surface Specialties Austria GmbH, 8402 Werndorf (AT)
(72) Erfinder: Gerlitz, Martin, Dr., 8055 Graz (AT); Friedl, Maximilian, 8101 Gratkorn (AT); Fischer, Thomas, 8010 Graz (AT); Supper, Ernst, 8054 Graz (AT); Krassnitzer, Manfred, 8010 Graz (AT)
(74) Vertreter: Deckers, Hellmuth, Dr.

(56) Entgegenhaltungen:
- EP-A- 0 189 058
- EP-A- 0 638 606
- EP-A- 0 741 155
- DE-A- 4 201 941
- FR-A- 1 209 906
- GB-A- 1 084 820
- US-A- 3 316 189
- US-A- 4 999 078

## Beschreibung

Wäßrige Zubereitungen, die Polyvinylbutyral ("PVB") enthalten, sind bekannt. Die meisten derartiger Systeme basieren auf Einsatz von ionischen Emulgatoren (Salze von Fettsäuren, Alkansulfonate oder Alkylaurylsulfonate: US-A 2,686,724, US-A 2,532,223, US-A 2,611,755, US-A 2,509,667, DE-A 27 52 054) oder von nichtionischen Emulgatortypen wie Polyvinylalkohol (JP-A 58/026374), äthoxylierten Fettalkoholen oder Umsetzungsprodukten von Polyalkylenglykolen mit Polyepoxiden (EP-A 0 638 606).

Alle diese fremdemulgierten Systeme weisen jedoch den generellen Nachteil auf, daß eine direkte Pigmentierung der Lacke nicht möglich ist, da die Scherstabilität der Emulsionen nicht ausreichend ist. Dazu kommen noch Nachteile durch den Emulgatortyp: bei hochmolekularen Polyäthylenglykol-Typen nimmt die Wasserfestigkeit der Filme rasch ab und bei Verwendung von niedermolekularen ionischen Emulgatoren ist eine Migration der Emulgatormoleküle im Film, sowie ein Herauslösen aus dem Harzverbund möglich, wodurch eine ständig wechselnde Oberflächenzusammensetzung bzw. wechselnde Filmeigenschaften bedingt sind.

Auch selbstemulgierende wäßrige Polyvinylbutyral-Dispersionen wurden beschrieben: dabei werden die für die Wasserverdünnbarkeit verantwortlichen Gruppen (ionischer oder nichtionischer Art) vor dem Acetalisierungsprozeß in das Polymer eingeführt:

In DE-A 32 46 605 wird eine Polyäthylenpfropfgrundlage für die Herstellung des Polyvinylakohols verwendet, welcher anschließend acetalisiert wird und aufgrund des Gehaltes an Polyäthylenglykolsegmenten zu wasserverdünnbaren Endprodukten führt.

In DE-A 42 35 151 wird ein Polyvinylalkoholcopolymerisat mit Äthylensulfonat (in Salzform) hergestellt, welches einer Acetalisierung unterworfen wird und durch den Gehalt an Sulfonat-Gruppen wasserverdünnbare Produkte ergibt.

Da in beiden Fällen von wäßrigen Polyvinylalkohol-Lösungen ausgegangen wird, fallen die erfindungsgemäßen Dispersionen mit recht niedrigem Festkörpergehalt an. Eine nachträgliche Abmischung mit Plastifizierharzen, die sehr häufig zur Verbesserung der Filmbildung eingesetzt werden, ist durch die reduzierte Verträglichkeit der modifizierten Produkte kaum mehr möglich. Außerdem sind die Produkte durch die Polyäthylenglykol-Struktur bzw. die Sulfonatgruppen recht empfindlich gegen Wasser und genügen nicht den Anforderungen für einen industriellen Einsatz.

Ein Fortschritt wurde durch die in der EP-A 0 741 155 beschriebenen anionisch stabilisierten Dispersionen erreicht, allerdings ist deren Korrosionsschutzwirkung nicht ausreichend, da durch die anionische Stabilisierung ein Zusatz von Phosphorsäure (wie bei konventionellen Korrosionsschutzgrundierungen üblich) wegen der dadurch ausgelösten Koagulation der Dispersionen nicht möglich ist.

In der Offenlegungsschrift DE-A 196 18 379 werden kationisch stabilisierte Epoxidharzdispersionen für die kataphoretische Elektrotauchlackierung beschrieben, die als zweite Harzkomponente ein Vinylacetat-Copolymerisat enthalten, welches auch Vinylacetal-Einheiten aufweisen kann.

Aufgabe dieser Erfindung war es daher, selbstemulgierende PVB-Dispersionen herzustellen, die einen Phosphorsäurezusatz erlauben und daher gleiche Korrosionsschutzeigenschaften aufweisen wie konventionelle "Flash Primer".

Es wurde nun gefunden, daß durch Modifikation des PVB mit tertiären Alkanolaminen (auch in Kombination mit kationisch stabilisierten Zumischharzen) wasserverdünnbare Grundierungen erhalten werden können, die den technischen Anforderungen genügen. Zudem ist es erfindungsgemäß möglich, die für verschiedene Anwendungszwecke optimale Harzzusammensetzung (nieder-, normal-, hochacetalisierte PVB-Typen, unterschiedliche Polymerisationsgrade oder Kombinationen mit Plastifizierharzen) in gleicher Weise in wäßrige Dispersionsform überzuführen.

Die Erfindung betrifft demgemäß wasserverdünnbare PVB-Dispersionen, welche erhältlich sind durch eine zweistufige Umsetzung, wobei in der ersten Stufe
- mindestens ein tertiäres Alkanolamin **A** und
- mindestens ein Diisocyanat **B** bis zum theoretisch berechneten NCO-Gehalt umgesetzt werden,
und die Mengen der Komponenten **A** und **B** so gewählt werden, daß die Stoffmenge der Diisocyanate **B** das 0,8 bis 1,3-fache der Stoffmenge der reaktiven Hydroxylgruppen in **A** ist,
und hierauf in der zweiten Stufe
- ein Polyvinylbutyral **C** in einer Anlösung von einem gegenüber Isocyanaten inertem Lösemittel bis zum völligen Umsatz aller Isocyanatgruppen mit dem Addukt **AB** aus dem ersten Schritt reagiert wird, wobei die Anzahl der Hydroxylgruppen in **C** mindestens das Zehnfache der Anzahl der Isocyanatgruppen im Reaktionsprodukt **AB** ist,
und diese aminmodifizierte PVB-Anlösung gegebenenfalls mit
- einem oder mehreren verträglichen und ebenfalls über tertiäre Aminogruppen wasserverdünnbaren Plastifizierharz(en) **D** kombiniert,
wobei die Harzmischung Festkörper-Massenanteile von
i) 20 bis 100 % modifiziertes Polyvinylbutyral **ABC**
   und
ii) 0 bis 80 % des geeigneten Plastifizierharzes **D** oder eines Gemisches mehrerer solcher geeigneter Plastifizierharze
enthält, mit der Maßgabe, daß die Summe aus i) plus ii) 100 % beträgt und die entstehende Harzmischung tertiäre Aminogruppen entsprechend einer Aminzahl von 20 bis 80 mg/g Festharz aufweist.

In der ersten Stufe ist es wesentlich, daß die Stoffmenge der Diisocyanate **B** das 0,8-bis 1,3-fache der Stoffmenge der reaktiven Hydroxylgruppen in **A** ist, das bedeutet, daß der Quotient der Stoffmenge der Isocyanatgruppen ***n***(NCO) in der Komponente **B** und der Stoffmenge der Hydroxylgruppen ***n***(OH) in der Komponente **A**

***n***(NCO) / ***n***(OH) = 1,6 bis 2,6

ist. Im Mittel verbleibt daher in jedem eingesetzten Diisocyanat-Molekül etwas mehr als eine (exakt 0,8 bis 1,3) unreagierte Isocyanatgruppe(n), die restlichen Isocyanatgruppen sind durch Reaktion mit dem Alkanolamin zu Urethangruppen umgewandelt worden. Es ist vorteilhaft, einen geringen Überschuß an Isocyanatgruppen einzusetzen, um die Reaktion von Isocyanatgruppen mit möglichen Verunreinigungen zu kompensieren. Werden als Komponente **A** zusätzlich oder ausschließlich Monoalkyldialkanolamine eingesetzt, so kann auf einen Überschuß an Isocyanatgruppen verzichtet werden; es kann sogar ein Teil (bis zu 50 %, bevorzugt bis zu 30 %) der Diisocyanate **B** durch Monoisocyanate ersetzt werden.

Die Aminzahl ist gemäß DIN 53 176 definiert als der Quotient derjenigen Masse ***m***_{KOH} an Kaliumhydroxid, die genausoviel Säure zur Neutralisation verbraucht wie eine zu untersuchende Probe, und der Masse ***m***_{B} dieser Probe (Masse des Feststoffes in der Probe bei Lösungen oder Dispersionen); ihre übliche Einheit ist "mg/g".

Nach Neutralisation von mindestens 50 %, bevorzugt über 70 %, der tertiären Aminogruppen mit (an)organischen Säuren werden die erfindungsgemäßen Produkte mit deionisiertem Wasser verdünnt.

Das verwendete Hilfslösemittel wird dabei - je nach Viskosität des Produktes - entweder vor Neutralisation im Vakuum oder im Azeotrop aus der Dispersion abdestilliert (gegebenenfalls auch unter reduziertem Druck).

Als Komponente A werden tertiäre Alkanolamine mit ein bis zwei OH-Gruppen eingesetzt. Bevorzugt sind Dialkyl-monoalkanolamine, bei denen die Alkylreste gleich oder verschieden sein können und bevorzugt aus linearen oder verzweigten Alkylresten mit 1 bis 6 Kohlenstoffatomen ausgewählt sind. Das zugrundeliegende Alkanolamin hat 2 bis 12 Kohlenstoffatome und trägt die Hydroxylgruppe und die Aminogruppe bevorzugt jeweils in α- und ω-Stellung. Ebenso lassen sich Dialkanol-Alkylamine mit 1 bis 6 Kohlenstoffatomen in der Alkyl- und 2 bis 12 Kohlenstoffatomen in der Alkanolgruppe einsetzen, wobei die Hydroxylgruppe ebenfalls bevorzugt in der ω-Stellung zur Aminogruppe steht. Dabei können auch solche Alkanolreste eingesetzt werden, die mehr als eine Hydroxylgruppe (an verschiedenen Kohlenstoffatomen) tragen. Beispiele für derartige Verbindungen sind N-Methyldiäthanolamin, N,N-Dimethyläthanolamin oder N,N-Diäthyläthanolamin oder Diäthylaminopropandiol. Eine besonders bevorzugte Gruppe sind die N,N-Dialkyläthanolamine.

Die Komponente A kann zur einfacheren Syntheseführung in einem inerten, hochsiedenden wasserverträglichen Lösemittel (zB: N-Methyl-Pyrrolidon), welches späterhin auch einen verbesserten Verlauf und eine verbesserte Filmbildung ermöglicht, gelöst werden. Üblicherweise werden Massenanteile von 1 bis 20 % (bezogen auf die endgültige Festharzmenge) an derartigen Koaleszenzmitteln eingesetzt. Lösemittel mit NCO-reaktiven Gruppen (beispielsweise Butylglykol, Glykoläther) werden gegebenenfalls erst nach abgeschlossener Isocyanatreaktion zugesetzt.

Bei der Diisocyanatkomponente **B** handelt es sich um beliebige organische Diisocyanate mit aliphatisch, cycloaliphatisch, araliphatisch und/oder aromatisch gebundenen, freien (d. i. nicht blockierten) Isocyanatgruppen. Bei der Verwendung von aliphatischen Diisocyanaten (bevorzugt werden dabei Hexamethylendiisocyanat, Trimethylhexamethylendiisocyanat, Isophorondiisocyanat und 1,4-Diisocyanatocyclohexan) erhält man elastischere Beschichtungen; die Verwendung von aromatischen Diisocyanaten (bevorzugt werden Toluylendiisocyanat, Diphenylmethandiisocyanat und Naphthylendiisocyanat) führt zu harten Beschichtungen. Die Auswahl erfolgt nach Viskosität der entstehenden Produkte und dem Anforderungsprofil für den jeweiligen Verwendungszweck. Wie bereits oben ausgeführt, kann ein Teil der Diisocyanate durch Monoisocyanate ersetzt weren, wenn als Komponente **A** Alkyldialkanolamine eingesetzt werden.

Die Reaktion der Komponente **A** mit der Komponente **B** verläuft unter starker Exothermie.

Als Komponente **C** können kommerziell erhältliche PVB-Typen verwendet werden, wobei die Eigenschaften der Beschichtung durch den Polymerisationsgrad und den Acetalisierungsgrad der entsprechenden PVB-Type entscheidend mitbeeinflußt werden. Übliche Kenndaten sind beispielsweise: Viskosität (6 %ige Lösung in Methanol, 20 °C) 1 bis 200 mPa·s; Acetalisierungsgrad 65 bis 90 %, bevorzugt 70 bis 85 % (berechnet als Massenanteil von Polyvinylacetal); Acetatgehalt 2 bis 5 %, bevorzugt 3 bis 4 % (berechnet als Massenanteil von Polyvinylacetat); Gehalt an OH-Gruppen bzw. Vinylalkoholgruppen 10 bis 30 %, bevorzugt 11 bis 20 % (berechnet als Massenanteil von Polyvinylalkohol).

Als Plastifizierharze (Komponente **D**) werden solche Harze eingesetzt, die mit Polyvinylbutyral verträglich sind, also nicht zu makroskopischer Entmischung neigen. Dies sind vor allem Aminharze, Phenolharze, Alkydharze sowie Epoxidgruppen-arme oder Epoxidgruppen-freie Harze auf Basis von Glycidyläthern von Dihydroxyaromaten (insbesondere die sogenannten Phenoxyharze). Besonders geeignet sind beispielsweise Umsetzungsprodukte von Bisphenol-A-basierenden Flüssigharzen (®Beckopox EP 140, spezifischer Gehalt an Epoxidgruppen ca. 5560 mmol/kg, "Epoxidäquivalentgewicht" EEW = 180 g/mol) mit (substituierten) Monophenolen und Bisphenolen, die durch den Einbau von Dialkylaminoalkylaminen (z. B.: Diäthylaminopropylamin) entsprechend einer Aminzahl von 20 bis 80 mg/g wasserverdünnbar sind.

Diese Plastifizierharze können in der Lackrezeptur auch als Vehikel für die gegebenenfalls zugesetzte, als Vernetzer wirkende Phosphorsäure dienen. Die Phosphorsäure wird bevorzugt in Kombination mit einem Verdicker gemeinsam mit dem Plastifizierharz in die mit den üblichen Lackadditiven versetzte PVB-Dispersion eingearbeitet; sie kann jedoch auch erst zugefügt werden, wenn die PVB-Dispersion und das Plastifizierharz bereits vermischt worden sind. Der Massenanteil der Phosphorsäure im fertigen Lack ist bevorzugt ca. 0,1 bis 5 %.

Filme auf der Grundlage der erfindungsgemäßen Dispersionen zeigen ausgezeichnete Haftungen auf Metall, Kunststoffen und Glas. Damit gefertigte Grundierungen zeigen auch gute Zwischenschichthaftung, sodaß auch eine gute Überlackierbarkeit erreicht wird. In Abhängigkeit von der Art des Plastifizierharzes können auch Filme mit ausgezeichneter Härte, Wasserbeständigkeit und Korrosionsschutzwirkung hergestellt werden.

Erfindungsgemäße Dispersionen können daher als Bindemittel für Washprimer bzw. "flash primer", Industrielacke, temperaturbeständige Lacke (zB: Heizkörperbeschichtung), Emballagenlacke, Haftgrundierungen, Schweißprimer, Parkettlacke, Straßenmarkierfarben und Klebstoffe verwendet werden, insbesondere auch als Haftvermittler oder temporärer Korrosionsschutz auf metallischen Substraten.

In den nachfolgenden Beispielen bedeutet ***n***(Gruppe) bzw. ***n***(Atome) jeweils die Stoffmenge ***n*** der betreffenden Gruppe mit der üblichen SI-Einheit "mol"(EP = Epoxidgruppen; NH = Amin-Wasserstoffatome; OH = Hydroxylgruppen).

### Beispiele:

| **Plastifizierharz 1 (PH 1):** | |
|---|---|
| | |
| 913 g | ®Beckopox EP 140 (EEW = 180 g/mol; spez. Epoxidgruppengehalt ca. 5560 mmol/kg); ***n***(EP)=5,07 mol |
| 211 g | Bisphenol A; ***n***(OH) = 1,85 mol |
| 188,2 g | Phenol; ***n***(OH) = 2,0 mol |
| 51,1 g | Dimethylaminopropylamin; ***n***(NH) = 1,0 mol |
| 1363,3 g | |

Epoxidharz, Bisphenol und Phenol wurden in einen Kessel gefüllt und unter Stickstoff auf 110 bis 120 °C erhitzt, bis eine klare und homogene Mischung entstanden war. Danach wurde auf 80 °C gekühlt und das Amin unter voller Kühlung zugesetzt, wobei sofort eine stark exotherme Reaktion einsetzte. Nach Zugabeende wurde unter der Ausnützung der auftretenden Exothermie der Ansatz auf ca. 150 bis 160 °C erhitzt und 3 bis 4 Stunden bei dieser Temperatur gehalten.

Das so erhaltene Produkt ließ sich für die Herstellung einer PVB-Dispersion weiterverarbeiten. Nach vollständiger Neutralisation der basischen Stickstoffgruppen (AZ =41 mg/g) mit einer flüchtigen organischen Säure (Ameisensäure) ergab sich eine stabile Dispersion mit einem Massenanteil an nichtflüchtigen Stoffen von 40 % und einer Viskosität von 50 mPa·s (DIN EN ISO 3219, 23 °C).

| **Plastifizierharz 2 (PH 2):** | |
|---|---|
| | |
| 380 g | ®Beckopox EP 140 ; ***n***(EP) = 2,11 mol |
| 388 g | Bisphenol A; ***n***(OH) = 3,40 mol |
| 413 g | N-Methylpyrrolidon |
| 53,5 g | Diäthylaminopropylamin; ***n***(NH) = 0,82 mol |
| 415 g | ®Beckopox EP 140; ***n***(EP) = 2,30 mol |
| 1236,5 g Festharz; 75 %ige Lösung in NMP | |

Epoxidharz, Bisphenol wurden in einen Kessel gefüllt und unter Stickstoff auf 110 bis 120 °C erhitzt, bis eine klare und homogene Mischung entstanden war, welche mit NMP verdünnt wurde. Danach wurde auf 80 °C gekühlt und das Amin unter voller Kühlung zugesetzt, wobei sofort eine stark exotherme Reaktion einsetzte. Nach Zugabeende wurde unter der Ausnützung der auftretenden Exothermie der Ansatz auf ca. 150 °C erhitzt und ca. 1 Stunde bei dieser Temperatur gehalten. Hierauf wurde weiteres Epoxidharz kontinuierlich über ca. 5 Stunden bei dieser Temperatur zugesetzt und anschließend noch 2 Stunden bei 160 °C nachgehalten.

Das so erhaltene Produkt ließ sich für die Herstellung einer PVB-Dispersion weiterverarbeiten. Nach vollständiger Neutralisation der basischen Aminogruppen (AZ = 37 mg/g) mit einer flüchtigen organischen Säure (Essigsäure) ergab sich eine stabile Dispersion mit einem Massenanteil an nichtflüchtigen Stoffen von 35 % und einer Viskosität von weniger als 50 mPa·s (DIN EN ISO 3219, 23°C).

| **Plastifizierharz 3 (PH 3):** | |
|---|---|
| | |
| 1358 g | ®Beckopox EP 140; ***n***(EP) = 7,54 mol |
| 121 g | Bisphenol A; ***n***(OH) =1,06 mol |
| 335 g | Phenol; ***n***(OH) = 3,56 mol |
| 129 g | Dimethylaminopropylamin; ***n***(NH) = 2,52 mol |
| 1943 g | |

Epoxidharz, Bisphenol und Phenol wurden in einen Kessel gefüllt und unter Stickstoff auf 110 bis 120 °C erhitzt, bis eine klare und homogene Mischung entstanden war. Danach wurde auf 80 °C gekühlt und das Amin unter voller Kühlung zugesetzt, wobei sofort eine stark exotherme Reaktion einsetzte. Nach Zugabeende wurde unter der Ausnützung der auftretenden Exothermie der Ansatz auf ca. 150 bis 160 °C erhitzt und 3 bis 4 Stunden bei dieser Temperatur gehalten. Das so erhaltene Produkt ließ sich zur Herstellung einer PVB-Dispersion weiterverarbeiten. Nach Neutralisation von 70 % der basischen Stickstoffgruppen (AZ = 73 mg/g) mit einer flüchtigen organischen Säure (Essigsäure) und Zusatz von NMP (10 % der Masse des Festharzes) ergab sich eine stabile Dispersion mit einem Massenanteil an nichtflüchtigen Stoffen von ca. 35 % und einer Viskosität von 50 mPa·s (DIN EN ISO 3219, 23 °C).

### PVB-Dispersion 1 (PVB 1)

255 g ®Mowital B 20 H (Polyvinylbutyral mit Acetalisierungsgrad von ca. 76 %, einem Acetatgehalt von ca. 3 % und einem Gehalt an Alkoholgruppen von ca. 20 %; Viskosität einer 10 %igen äthanolischen Lösung bei 20 °C ca. 23 mPa·s) wurden in 820 g Xylol gelöst und auf 80 °C temperiert. In diese Anlösung wurden 53 g einer 50 %igen Anlösung des Isocyanat-funktionellen Umsetzungsproduktes aus 174 g Toluylendiisocyanat (TDI) mit 89 g Dimethyläthanolamin in Xylol (Durchführung gemäß Patentschriften AT-B 342 169, AT-B 346 989, AT-B 362 479) rasch zugegeben und der Ansatz bei 100 °C 1 Stunde gehalten (Aminzahl: 27,5 mg/g; Massenanteil an nichtflüchtigen Stoffen ca. 25 %).

Zu 205 g dieser Vorstufe wurden 180 g des Plastifizierharzes 3 (PH 3), sowie 23 g NMP zugesetzt und 1 Stunde bei 100 °C homogenisiert. Der Massenanteil an PVB im Festkörperanteil der Harzzusammensetzung betrug ca. 20 %. Die Aminzahl war ca. 60 mg/g; das Massenverhältnis von Lösunsgmittel (NMP) und Festharz war ca. 10 %. Nach Neutralisation von 90 % der basischen Stickstoffgruppen mit Ameisensäure und Verdünnen mit Wasser wurde das als Hilfslösemittel verwendete Xylol im Azeotrop vollständig abdestilliert. Es ergab sich eine stabile Dispersion mit einem Massenanteil an nichtflüchtigen Stoffen von ca. 35 % und einer Viskosität von unter 50 mPa·s bei 23 °C.

### PVB-Dispersion 2 (PVB 2)

255 g ®Mowital B 20 H wurden in 840 g Xylol gelöst und auf 80 °C temperiert. In diese Anlösung wurden 76 g einer 50 %igen Anlösung des Isocyanat-funktionellen Umsetzungsproduktes aus 174 g TDI mit 117 T Diäthyläthanolamin in Xylol (Durchführung gemäß Patentschriften AT-B 342 169, AT-B 346 989, AT-B 362 479) rasch zugegeben und der Ansatz bei 100 °C 1 Stunde gehalten (Aminzahl: 25 mg/g; Massenanteil an nichtflüchtigen Stoffen ca. 25 %).

Zu 400 g dieser Vorstufe wurden 200 g des Plasfifizierharzes 2 (PH 2, Massenanteil an nichtflüchtigen Stoffen ca. 75 %) zugesetzt und 1 Stunde bei 100°C homogenisiert. der Massenanteil von PVB im Festharz betrug 34,8 %. Die Aminzahl war 32 mg/g; das Massenverhältnis von NMP zu Festharz betrug 20 %. Nach Neutralisation aller basischen Aminogruppen mit Ameisensäure und Verdünnen mit Wasser wurde das als Hilfslösemittel verwendete Xylol im Azeotrop vollständig abdestilliert.
Es ergab sich eine stabile Dispersion mit einem Massenanteil an nichtflüchtigen Stoffen von ca. 29 % und einer Viskosität von weniger als 50 mPa·s bei 23 °C.

### PVB-Dispersion 3 (PVB 3)

255 g ®Mowital B 20 H wurden in 850 g Xylol gelöst und auf 80 °C temperiert. In diese Anlösung wurden 84 g einer 50 %igen Anlösung des Isocyanat-funktionellen Umsetzungsproduktes aus 174 g TDI mit 89 g Dimethyläthanolamin in Xylol (Durchführung gemäß Patentschriften AT-B 342 169, AT-B 346 989, AT-B 362 479) rasch zugegeben und der Ansatz bei 100 °C 1 Stunde gehalten (Aminzahl: 30 mg/g; Massenanteil an nichtflüchtigen Stoffen: 25 %).

Zu 400 g dieser Vorstufe wurden 100 g des Plastifizierharzes 1 (PH 1), sowie 20 g NMP zugesetzt und 1 Stunde bei 100 °C homogenisiert. Der Massenanteil von PVB im Festharz betrug ca. 43 %; die Aminzahl war 36 mg/g; das Massenverhältnis von Lösungsmittel NMP zu Festharz betrug ca. 20 %. Nach Neutralisation aller basischen Stickstoffgruppen mit Ameisensäure und Verdünnen mit Wasser wurde das als Hilfslösemittel verwendete Xylol im Azeotrop vollständig abdestilliert. Es ergab sich eine stabile Dispersion mit einem Massenanteil an nichtflüchtigen Stoffen von ca. 23 % und einer Viskosität von weniger als 50 mPa·s bei 23 °C.

### Vergleichsdispersion 4 (PVB 4)

### (Verwendung einer nicht aminmodifizierten PVB-Komponente)

255 g ®Mowital B 20 H wurden in 765 g Xylol gelöst und auf 80 °C temperiert (Massenanteil an nichtflüchtigen Stoffen von ca. 25 %). Zu 400 g dieser Vorstufe wurden 150 g des Plastifizierharzes 3 (PH 3), sowie 25 g NMP zugesetzt und 1 Stunde bei 100 °C homogenisiert.
Der Massenanteil an PVB im Festharz betrug ca. 40 %; die Aminzahl war 43 mg/g; das Massenverhältnis von Lösungsmittel NMP zu Festharz betrug ca. 20 %.

Nach der Neutralisation sämtlicher basischen Stickstoffgruppen mit Ameisensäure und Verdünnen mit Wasser wurde das als Hilfslösemittel verwendete Xylol im Azeotrop vollständig abdestilliert. Bereits während des Destillationsphase wurde das Produkt inhomogen, nach dem Verdünnen mit Wasser erfolgte Phasenseparation.

### Lack 1:

| **Paste:** (Zahlenangaben in g/100 g) | | |
|---|---|---|
| 77,0 | erfindungsgemäße Dispersion PVB 3 | |
| 7,6 | ®Additol VXW 6208 | (Dispergiermittel) |
| 2,5 | ®Acrysol RM8/Lff. | (Rheologieadditiv) vorgemischt mit |
| 7,7 | VE-Wasser | |
| 3,8 | Butyldiglykol | |
| 1,4 | ®Additol XW 376 | (Entschäumer) |
| 100,0 | | |

| **Auflacken:** | | |
|---|---|---|
| zu | 68,0 g | der Paste wurden zugemischt: |
| | 21,0 g | Plastifizierharz 1 (PH 1) |
| | 11,0 g | Härtermischung ca. 5% |
| | 100,0 g | Lack |

| (Härtermischung: | | |
|---|---|---|
| | 5,0 g | ®Acrysol RM 8/Lff. |
| | 88,7 g | VE-Wasser |
| | 6,3 g | Phosphorsäure 75 %ig |
| | 100,0 g | Härtermischung) |

Herstellung: Die Bestandteile der Paste wurden in der angegebenen Reihenfolge gemischt und mit einem Dissolver gut homogenisiert. Beim Auflacken wurde die Paste vorgelegt und mit Plastifizierharz und dem vorgemischten Härter versetzt. Bei ca. 20 °C war der Lack ca. 5 Stunden lang verarbeitbar.

### Lack 2:

Lack 1 wurde nachgearbeitet, jedoch wurde keine Härtermischung zugesetzt.

### Lack 3:

Konventioneller Flashprimer unter Verwendung eines Epoxidharzes

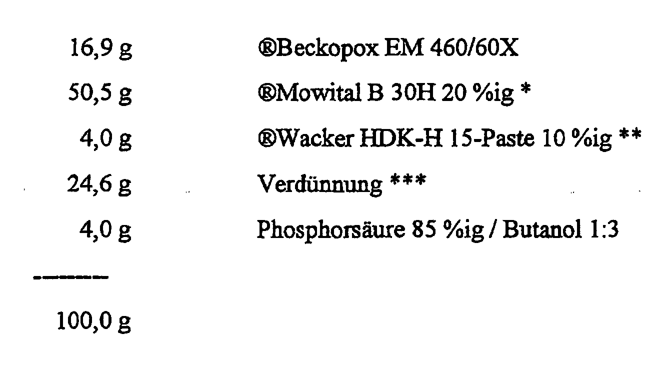

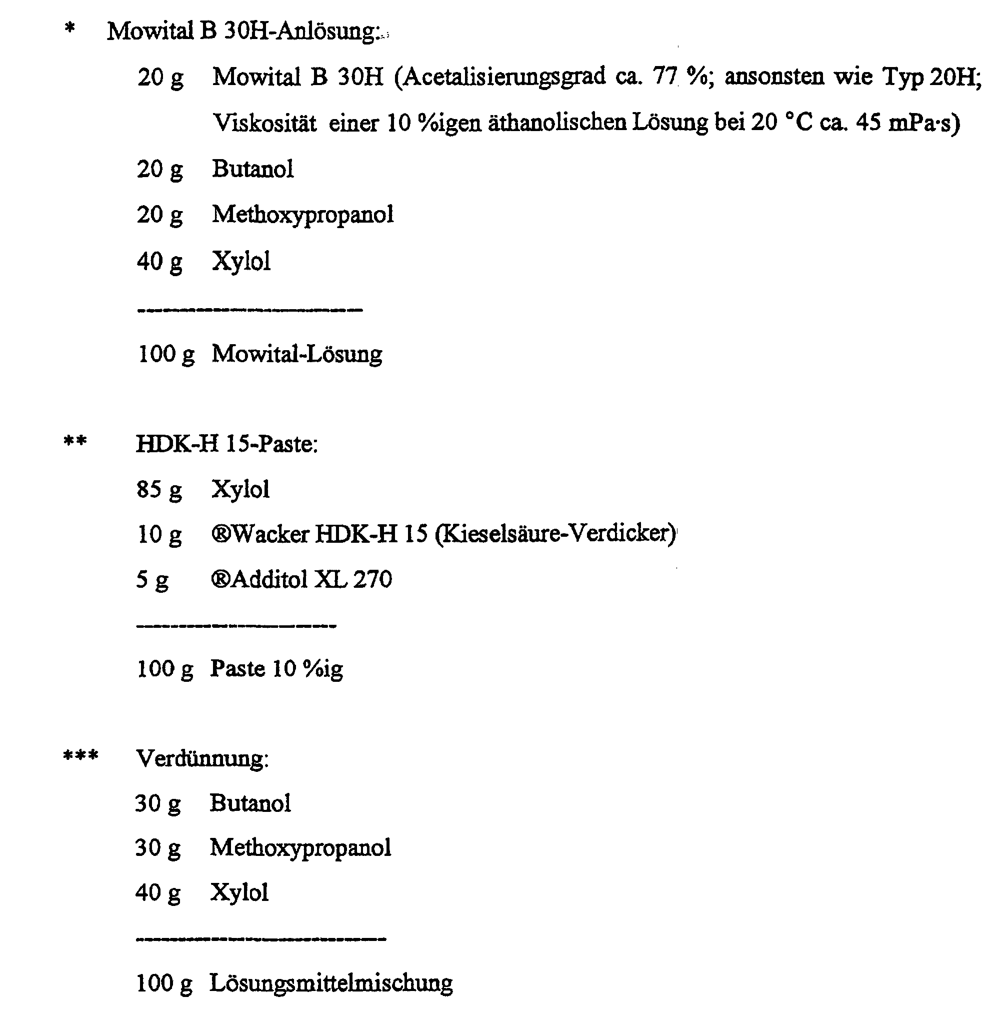

### Lack 4:

Bindemittel gemäß Beispiel 1) der Anmeldung EP-A 0 741 155

| | |
|---|---|
| 77,0 g | erfindungsgemäße Dispersion nach Beispiel 1 der EP-A 0 741 155 |
| 7,6 g | ®Additol VXW 6208 (Dispergiermittel) |
| 2,5 g | ®Acrysol RM8/Lff. ( Rheologieadditiv ) vorher mit |
| 7,7 g | VE-Wasser mischen |
| 3,8 g | Butyldiglykol |
| 1,4 g | ®Additol XW 376 (Entschäumer) |
| 100,0 g | Lack |

### Lackvergleich:

Die Lacke werden auf verzinktem Eisenblack appliziert.

| | Lack 1 | Lack 2 | Lack 3 | Lack 4 |
|---|---|---|---|---|
| Haftung nach Belastung | + | 0 | 0+ | 0 |
| Wasserfestigkeit | + | - | + | - |
| Korrosionsschutz | + | - | 0+ | - |
| Aufbau mit wäßrigem Decklack | + | 0 | + | - |

Die Bewertungen bedeuten dabei:

| | |
|---|---|
| + | gut |
| 0+ | befriedigend |
| 0 | ausreichend |
| - | mangelhaft |

Mit dem erfindungsgemäßen Lack 1 werden gute Ergebnisse bei allen untersuchten Eigenschaften erzielt, die Eigenschaften von konventionellen wash primer-Zusammensetzungen auf Basis von Phenoxyharzen (Lack 3) werden zum Teil sogar übertroffen. Ohne Zusatz von Härter (Lack 2) werden ähnlich unbefriedigende Ergebnisse erhalten wie bei einem anionisch stabilisierten PVB (Lack 4).

## Patentansprüche

1. Wasserverdünnbare Polyvinylbutyral-Dispersionen, welche erhältlich sind durch eine zweistufige Umsetzung, wobei in der ersten Stufe
- mindestens ein tertiäres Alkanolamin **A** und
- mindestens ein Diisocyanat **B** bis zum theoretisch berechneten NCO-Gehalt umgesetzt werden,
und die Mengen der Komponenten **A** und **B** so gewählt werden, daß die Stoffmenge der Diisocyanate **B** gleich dem 0,8- bis 1,3-fachen der Stoffmenge der reaktiven Hydroxylgruppen in **A** ist,
und hierauf in der zweiten Stufe
- ein Polyvinylbutyral **C** in einer Anlösung von einem gegenüber Isocyanaten inerten Lösemittel bis zum völligen Umsatz aller Isocyanatgruppen mit dem Addukt **AB** aus dem ersten Schritt unter Bildung des Produktes **ABC** reagiert wird, wobei die Anzahl der Hydroxylgruppen in **C** mindestens das Zehnfache der Anzahl der Isocyanatgruppen im Reaktionsprodukt **AB** ist,
und diese Lösung des aminmodifizierten Polyvinylbutyrals **ABC** gegebenenfalls mit
- einem oder mehreren verträglichen und ebenfalls über tertiäre Aminogruppen wasserverdünnbaren Plastifizierharz(en) **D** kombiniert,
wobei die Harzmischung Festkörper-Massenanteile von (jeweils bezogen auf Festharze)
i) 20 bis 100 % modifiziertes Polyvinylbutyral **ABC** und
ii) 0 bis 80 % des geeigneten Plastifizierharzes **D** oder eines Gemisches mehrerer solcher geeigneter Plastifizierharze
enthält, mit der Maßgabe, daß die Summe aus i) plus ii)100 % beträgt und die entstehende Harzmischung tertiäre Aminogruppen entsprechend einer Aminzahl von 20 bis 80 mg/g Festharz aufweist, und wobei nach Neutralisation von mindestens 50 % der tertiären Aminogruppen der aminmodifizierten Polyvinylbutyrale **ABC** mit (an)organischen Säuren die erfindungsgemäßen Produkte mit deionisiertem Wasser verdünnt werden.

2. Wasserverdünnbare Polyvinylbutyral-Dispersionen nach Anspruch 1, **dadurch gekennzeichnet, daß** als Komponente **A** tertiäre Alkanolamine mit ein bis zwei OH-Gruppen eingesetzt werden.

3. Wasserverdünnbare Polyvinylbutyral-Dispersionen nach Anspruch 1, **dadurch gekennzeichnet, daß** als Komponente **A** Dialkyl-monoalkanolamine eingesetzt werden, bei denen die Alkylreste gleich oder verschieden sind und aus linearen oder verzweigten Alkylresten mit 1 bis 6 Kohlenstoffatomen ausgewählt sind.

4. Wasserverdünnbare Polyvinylbutyral-Dispersionen nach Anspruch 1, **dadurch gekennzeichnet, daß** die Komponente **A** abgeleitet ist von einem Alkanolamin mit 2 bis 12 Kohlenstoffatomen, das die Hydroxylgruppe und die Aminogruppe jeweils in α- und ω-Stellung trägt.

5. Wasserverdünnbare Polyvinylbutyral-Dispersionen nach Anspruch 1, **dadurch gekennzeichnet, daß** als Komponente **A** Dialkanol-Alkylamine mit 1 bis 6 Kohlenstoffatomen in der Alkyl- und 2 bis 12 Kohlenstoffatomen in der Alkanolgruppe eingesetzt werden, wobei die Hydroxylgruppe in der ω-Stellung zur Aminogruppe steht, und wobei bis zu 50 % der Düsocyanate **B** durch Monoisocyanate ersetzt sein können.

6. Wasserverdünnbare Polyvinylbutyral-Dispersionen nach Anspruch 1, **dadurch gekennzeichnet, daß** als Komponente **B** aromatische Diisocyanate eingesetzt werden.

7. Wasserverdünnbare Polyvinylbutyral-Dispersionen nach Anspruch 1, **dadurch gekennzeichnet, daß** als Komponente **C** Polyvinylbutyrale eingesetzt werden mit einem Acetalisierungsgrad 65 bis 90 % (berechnet als Massenanteil von Polyvinylacetal), einem Acetatgehalt 2 bis 5 % (berechnet als Massenanteil von Polyvinylacetat) und einem Gehalt an Alkohol-Gruppen 10 bis 30 % (berechnet als Massenanteil von Polyvinylalkohol).

8. Verfahren zur Herstellung von wasserverdünnbaren Polyvinylbutyral-Dispersionen, wobei in der ersten Stufe tertiäre Alkanolamine **A** mit Diisocyanaten **B** in solchen Mengen umgesetzt werden, daß die Stoffmenge der Isocyanate **B** gleich dem 0,8-bis 1,3-fachen der Stoffmenge der Hydroxylgruppen in **A** ist, und in der zweiten Stufe das Addukt **AB** der ersten Stufe mit einem Hydroxylgruppen-haltigen Polyvinylbutyral **C** umgesetzt wird, wobei die Stoffmenge der Hydroxylgruppen in **C** mindestens das zehnfache der Stoffmenge der Isocyanatgruppen beträgt, und anschließend mindestens 50 % der Aminogruppen des Reaktionsproduktes **ABC** der zweiten Stufe durch Zugabe von Säuren neutralisiert werden.

9. Verwendung von wasserverdünnbaren Polyvinylbutyral-Dispersionen nach Anspruch 1 als Haftvermittler oder temporärer Korrosionsschutz auf metallischen Substraten.

10. Wasserverdünnbare Polyvinylbutyral-Dispersionen nach Anspruch 1, **dadurch gekennzeichnet, daß** sie zusätzlich ein Plastifizierharz **D** enthalten, das ausgewählt ist aus Phenoxyharzen, Aminharzen, Alkydharzen und Phenolharzen.

11. Lacke enthaltend wasserverdünnbare Polyvinylbutyral-Dispersionen nach Anspruch 1, **dadurch gekennzeichnet, daß** sie einen Massenanteil von 0,1 bis 5 % an Phosphorsäure enthalten.

## Revendications

1. Dispersions de poly(butyral de vinyle) diluables à l'eau que l'on peut obtenir à l'aide d'une réaction en deux étapes, en faisant réagir dans la première étape
- au moins une alcanolamine tertiaire **A** et
- au moins un diisocyanate **B** jusqu'à l'obtention de la teneur théorique calculée en NCO,
et les quantités des composants **A** et **B** sont choisies de façon telle que la quantité de matière des diisocyanates **B** soit égale à une quantité de 0,8 à 1,3 fois la quantité de matière des groupes hydroxyle réactifs dans **A**,
et ensuite, dans la deuxième étape,
- on fait réagir un poly(butyral de vinyle) **C**, dans une solution d'un solvant inerte vis-à-vis des isocyanates jusqu'à la réaction complète de tous les groupes isocyanato, sur le produit d'addition **AB** de la première étape en formant le produit **ABC,** le nombre des groupes hydroxyle dans C étant au moins 10 fois le nombre des groupes isocyanato dans le produit réactionnel **AB,** et éventuellement on combine cette solution du poly(butyral de vinyle) **ABC** modifié par des amines avec
- une ou plusieurs résine(s) plastifiante(s) **D** diluables à l'eau,
le mélange de résine présentant des taux en masse de matières solides (à chaque fois par rapport à la résine solide)
i) de 20 à 100 % de poly(butyral de vinyle) **ABC** modifié
et
ii) de 0 à 80 % de la résine plastifiante **D** appropriée ou d'un mélange de plusieurs telles résines plastifiantes appropriées, à condition que la somme de i) plus ii) soit de 100 % et le mélange de résine formé présente des groupes amino tertiaires correspondant à un indice d'amine de 20 à 80 mg/g de résine solide, et après neutralisation d'au moins 50 % des groupes amino tertiaires des poly(butyrals de vinyle) **ABC** modifiés par des acides (in)organiques, on dilue les produits conformes à l'invention à l'eau désionisée.

2. Dispersions de poly(butyral de vinyle) diluables à l'eau selon la revendication 1, **caractérisées en ce qu'**on utilise en tant que composant **A** des alcanolamines tertiaires présentant un à deux groupes OH.

3. Dispersions de poly(butyral de vinyle) diluables à l'eau selon la revendication 1, **caractérisées en ce qu'**on utilise en tant que composant **A** des dialkyl-monoalcanolamines, dans lesquels les restes alkyles sont identiques ou différents et sont pris parmi les restes alkyles linéaires ou ramifiés présentant 1 à 6 atomes de carbone.

4. Dispersions de poly(butyral de vinyle) diluables à l'eau selon la revendication 1, **caractérisées en ce que** le composant **A** dérive d'une alcanolamine présentant 2 à 12 atomes de carbone, qui porte le groupe hydroxyle et le groupe amino en position α et ω.

5. Dispersions de poly(butyral de vinyle) diluables à l'eau selon la revendication 1, **caractérisées en ce qu'**on utilise en tant que composant **A** des dialcanol-alkylamines présentant 1 à 6 atomes de carbone dans le groupe alkyle et 2 à 12 atomes de carbone dans le groupe alcanol, le groupe hydroxyle étant en position ω par rapport au groupe amino, et jusqu'à 50 % des diisocyanates **B** pouvant être remplacés par des monoisocyanates.

6. Dispersions de poly(butyral de vinyle) diluables à l'eau selon la revendication 1, **caractérisées en ce qu'**on utilise en tant que composant **B** des diisocyanates aromatiques.

7. Dispersions de poly(butyral de vinyle) diluables à l'eau selon la revendication 1, **caractérisées en ce qu'**on utilise en tant que composant **C** des poly(butyrals de vinyle) ayant un degré d'acétalisation de 65 à 90 % (calculé en tant que taux en masse de poly(acétal de vinyle)), une teneur en acétate de 2 à 5 % (calculée comme taux en lasse de poly(acétate de vinyle)) et une teneur en groupes alcool de 10 à 30 % (calculée comme taux en masse de poly(alcool vinylique)).

8. Procédé pour la préparation de dispersions de poly(butyral de vinyle) diluables à l'eau en faisant réagir dans la première étape les alcanolamines tertiaires A sur les diisocyanates B dans des quantités telles que la quantité en matière des isocyanates **B** soit égale à 0,8-1,3 fois la quantité de matières des groupes hydroxyle dans **A**, et dans la deuxième étape, on fait réagir le produit d'addition **AB** de la première étape sur un poly(butyral de vinyle) **C** présentant des groupes hydroxyle, la quantité de matière des groupes hydroxyle dans **C** est d'au moins 10 fois la quantité de matière des groupes isocyanato, et ensuite on neutralise par ajout d'acides au moins 50 % des groupes amino du produit réactionnel **ABC** de la deuxième étape.

9. Utilisation de dispersions de poly(butyral de vinyle) diluables à l'eau selon la revendication 1 en tant qu'agent d'accrochage ou en tant que protection temporaire contre la corrosion sur substrats métalliques.

10. Dispersions de poly(butyral de vinyle) diluables à l'eau selon la revendication 1, **caractérisées en ce qu'**elles renferment de plus une résine plastifiante **D** choisie parmi les résines phénoxydes, les résines amino, les résines alkydes et les résines phénoliques.

11. Vernis renfermant des dispersions de poly(butyral de vinyle) diluables à l'eau selon la revendication 1, **caractérisées en ce qu'**elles renferment un taux en masse de 0,1 à 5 % d'acide phosphorique.

## Claims

1. A water-dilutable polyvinylbutyral dispersion obtainable by a two-stage reaction in the first stage of which
- at least one tertiary alkanolamine **A** and
- at least one diisocyanate **B** are reacted to the theoretically calculated NCO content
and the amounts of components **A** and **B** are chosen such that the molar amount of the diisocyanates **B** is from 0.8 to 1.3 times the molar amount of the reactive hydroxyl groups in **A**
and thereafter in the second stage
- a polyvinylbutyral **C** in partial solution in a solvent which is inert towards isocyanates is reacted with the adduct **AB** from the first step to form the product **ABC** until all of the isocyanate groups have undergone complete reaction, the number of hydroxyl groups in **C** being at least ten times the number of isocyanate groups in the reaction product **AB,**
and combining this solution of the amine-modified polyvinylbutyral **ABC,** if desired, with
- one or more compatible plasticizing resins **D** which is or are likewise water-dilutable by way of tertiary amino groups,
the resin mixture containing mass fractions of solids of (based in each case on resin solids)
i) from 20 to 100% of modified polyvinylbutyral **ABC** and
ii) from 0 to 80% of the suitable plasticizing resin **D** or of a mixture of two or more such suitable plasticizing resins
with the proviso that the sum of i) + ii) is 100% and the resulting resin mixture has tertiary amino groups corresponding to an amine number of from 20 to 80 mg/g resin solids, and, following neutralization of at least 50% of the tertiary amino groups of the amine-modified polyvinylbutyrals **ABC** with (in)organic acids, diluting the product with deionized water.

2. A water-dilutable polyvinylbutyral dispersion as claimed in claim 1, wherein tertiary alkanolamines having one to two OH groups are used as component **A**.

3. A water-dilutable polvinylbutyral dispersion as claimed in claim 1, wherein dialkyl-monoalkanolamines in which the alkyl radicals are identical or different and are selected from linear or branched alkyl radicals having 1 to 6 carbon atoms are used as component **A**.

4. A water-dilutable polyvinylbutyral dispersion as claimed in claim 1, wherein component **A** is derived from an alkanolamine having 2 to 12 carbon atoms which carries the hydroxyl group and the amino group in positions α and ω, respectively.

5. A water-dilutable polyvinylbutyral dispersion as claimed in claim 1, wherein dialkanol-alkylamines having 1 to 6 carbon atoms in the alkyl group and 2 to 12 carbon atoms in the alkanol group are used as component **A,** the hydroxyl group being positioned ω to the amino group, and it being possible to replace up to 50% of the diisocyanates **B** by monoisocyanates.

6. A water-dilutable polyvinylbutyral dispersion as claimed in claim 1, wherein aromatic diisocyanates are used as component **B**.

7. A water-dilutable polyvinylbutyral dispersion as claimed in claim 1, wherein polyvinylbutyrals having a degree of acetalization of from 65 to 90% (calculated as mass fraction of polyvinylacetal), an acetate content of from 2 to 5% (calculated as mass fraction of polyvinyl acetate) and an alcohol group content of from 10 to 30% (calculated as mass fraction of polyvinyl alcohol) are used as component **C**.

8. A process for preparing a water-dilutable polyvinylbutyral dispersion, in the first stage of which tertiary alkanolamines **A** are reacted with diisocyanates **B** in amounts such that the molar amount of the isocyanates **B** is from 0.8 to 1.3 times the molar amount of the hydroxyl groups in **A**, and in the second stage the adduct **AB** from the first stage is reacted with a hydroxyl-containing polyvinylbutyral **C**, the molar amount of the hydroxyl groups in **C** being at least ten times the molar amount of the isocyanate groups, and subsequently at least 50% of the amino groups of the reaction product **ABC** from the second stage are neutralized by adding acids.

9. The use of a water-dilutable polyvinylbutyral dispersion as claimed in claim 1 as an adhesion promoter or for temporary corrosion protection on metallic substrates.

10. A water-dilutable polyvinylbutyral dispersion as claimed in claim 1, which further comprises a plasticizing resin **D** selected from phenoxy resins, amino resins, alkyd resins and phenolic resins.

11. A coating material comprising a water-dilutable polyvinylbutyral dispersion as claimed in claim 1, which material comprises a phosphoric acid mass fraction of from 0.1 to 5%.
